# EUROPÄISCHE PATENTSCHRIFT

(11) **EP 2 971 958 B1**
(45) Veröffentlichungstag und Bekanntmachung des Hinweises auf die Patenterteilung: **20.11.2019**
(21) Anmeldenummer: 14706631.0
(22) Anmeldetag: 26.02.2014
(51) Int. Cl.: F23D 14/34, F23D 14/36

(54) **GASVENTILEINHEIT**
GAS VALVE UNIT
UNITÉ DE SOUPAPE DE GAZ

(30) Priorität: 13.03.2013 EP 13290052
(43) Veröffentlichungstag der Anmeldung: 20.01.2016
(73) Patentinhaber: BSH Hausgeräte GmbH, 81739 München (DE)
(72) Erfinder: CADEAU, Christophe, F-67100 Strasbourg (FR); NAUMANN, Jörn, 77770 Durbach (DE)
(86) Internationale Anmeldenummer: PCT/EP2014/053726
(87) Internationale Veröffentlichungsnummer: WO 2014/139798

(56) Entgegenhaltungen:
- EP-A2- 1 909 029
- WO-A1-01/87494
- WO-A2-2012/080055

## Beschreibung

Die Erfindung betrifft eine Gasventileinheit zum Einstellen eines einem Gasbrenner eines Gasgeräts, insbesondere eines Gaskochgeräts, zugeführten Gasvolumenstroms, wobei die Gasventileinheit eine Betätigungsmechanik für ein Magnetventil aufweist.

Dabei hat die Gasventileinheit ein Ventilgehäuse und eine Betätigungswelle zum Einstellen eines Öffnungsquerschnitts der Gasventileinheit und ein zusätzliches Absperrventil, wobei eine Bewegung der Betätigungswelle mittels eines linear verschiebbaren Verbindungselementes auf das Absperrventil übertragbar ist.

Gasventileinheiten der genannten Art mit einem Absperrventil werden häufig auch als gesicherte Gasventile bezeichnet. Auf einen Bedienabschnitt der Gasventileinheit ist in der Regel ein Drehknebel mit einer Betätigungswelle aufgesteckt, auf den ein Bediener des Gaskochgeräts manuell zugreifen kann. Das Einstellen des Öffnungsquerschnitts der Gasventileinheit erfolgt in der Regel durch Drehen der Betätigungswelle. Das Absperrventil kann von dem Bediener durch axiales Verschieben der Betätigungswelle geöffnet werden, indem er auf den Drehknebel drückt. Die axiale Bewegung der Betätigungswelle wird auf ein linear verschiebbares Verbindungselement übertragen. Diese Übertragung der Bewegung der Betätigungswelle auf das Verbindungselement kann direkt oder indirekt, beispielsweise über eine Einrichtung zum Umlenken der Bewegungsrichtung, erfolgen. Das Verbindungselement steht direkt oder indirekt mit einem Absperrelement des Absperrventils in Kontakt. Mit einer axialen Bewegung des Verbindungselements in Richtung des Absperrelements kann dieses von einem Ventilsitz abgehoben und dadurch das Absperrventil geöffnet werden.

Üblicherweise besitzt das Absperrventil weiter eine Magneteinheit, mit der das Absperrelement in Offenstellung gehalten werden kann, nachdem das Absperrelement manuell durch Drücken der Betätigungswelle in diese Offenstellung gebracht wurde. Die mit der Magneteinheit erzeugbare Magnetkraft ist jedoch nicht ausreichend groß, um das Absperrelement ausgehend von seiner geschlossenen Stellung in die Offenstellung zu bewegen. Die Magneteinheit enthält in der Regel eine gewickelte Spule, die mit einem im Bereich eines Gasbrenners angeordneten Thermoelement verbunden ist. Die mit dem Thermoelement erzeugte elektrische Spannung bewirkt einen Stromfluss durch die Spule der Magneteinheit und erzeugt damit eine magnetische Kraft, die das Absperrventil offen hält, solange an dem Gasbrenner eine Gasflamme brennt. Wenn die Gasflamme erlischt, schließt das Absperrventil automatisch und kann nur manuell durch Drücken der Betätigungswelle wieder geöffnet werden.

Bei diesen herkömmlichen Gasventileinheiten besteht das Problem, dass das Absperrelement durch Eindrücken der Betätigungswelle soweit in Öffnungsrichtung bewegt werden kann, bis es an der Magneteinheit ansteht. Sofern das Eindrücken der Betätigungswelle mit zu großer Kraft erfolgt, kann dies zu einer Verformung der Oberfläche der Ankerplatte führen, welche die Funktion des Absperrventils beeinträchtigen kann. Insbesondere ist es möglich, dass die verformte Oberfläche der Ankerplatte- von der Magneteinheit nicht mehr in Offenstellung gehalten werden kann, weil zwischen der Ankerplatte und der Magneteinheit infolge der verformten Oberfläche ein zu großer Luftspalt besteht.

Das Dokument WO 2012/080055 zeigt eine Gasventileinheit zum Einstellen eines einem Gasbrenner eines Gasgeräts zugeführten Gasvolumenstroms, wobei die Gasventileinheit ein Ventilgehäuse und eine Betätigungswelle zum Einstellen eines Öffnungsquerschnitts der Gasventileinheit und ein zusätzliches Absperrventil aufweist. Hierbei ist eine Bewegung der Betätigungswelle mittels eines linear verschiebbaren Verbindungselements auf das Absperrventil übertragbar ist. Das Verbindungselement hat dabei mindestens eine Feder. Dabei kann die Feder als Überdrücksicherung wirken.

Die notwendige Steifigkeit der Feder bedingt einen gewissen Drahtdurchmesser der Feder. Der Drahtdurchmesser und das dadurch bedingte Volumen der Feder reduzieren den Durchflussbereich für den durchzuführenden Gasvolumenstrom. Dadurch kommt es zu einem Druckabfall des durchzuführenden Gasvolumenstroms. Des Weiteren muss die Steifigkeit der Feder groß genug sein, um bei einem normalen Betrieb nur eine geringe oder sehr geringe Deformation der Feder zu verursachen. Allerdings darf die Steifigkeit auch nicht zu hoch sein, um eine maximale Deformationskraft unter einer bestimmten Grenze zu erhalten. Insgesamt ergeben sich damit für die Feder relativ hohe Designanforderungen.

Das Dokument EP 1 909 029 A2 beschreibt ein elektromagnetisches Sicherheitsventil, welches an einen Gashahnkörper angepasst ist. Das elektromagnetische Sicherheitsventil umfasst einen Elektromagneten, ein Dichtungselement, das direkt mit einem beweglichen Anker des Elektromagneten verbunden ist, welcher einen Hub ausführt, der einem Luftspalt des Elektromagneten beim Einschalten zum Öffnen eines Ventilsitzes entspricht, ein metallisches Gehäuse, ein röhrenförmiges schützendes Gehäuse, das den Elektromagneten mittels Umschließens beherbergt, eine Schraubenrückholfeder für das Dichtungselement, welche im schützenden Gehäuse beherbergt ist, und einen elektrischen Anschluss, der den Elektromagneten versorgt, wobei das Sicherheitsventil in ein Gehäuse des Gashahnkörpers eingebaut ist. Das röhrenförmige schützende Gehäuse umfasst zumindest ein bewegliches Element, wie beispielsweise eine bewegliche Haube, und ein röhrenförmiges feststehendes Element, das den Kern des Elektromagneten umschließt. Die röhrenförmige bewegliche Haube ist beispielsweise aus Kunststoff gefertigt.

Das Dokument US 2013/0240767 A1 zeigt eine Gasventileinheit zum Einstellen eines einem Gasbrenner eines Gasgeräts, insbesondere eines Gaskochgeräts, zugeführten Gasvolumenstroms. Die Gasventileinheit weist ein Ventilgehäuse und eine Betätigungswelle zum Einstellen eines Öffnungsquerschnitts der Gasventileinheit und ein zusätzliches Absperrventil auf. Eine Bewegung der Betätigungswelle ist mittels eines linear verschiebbaren Verbindungselements auf das Absperrventil übertragbar. Das Verbindungselement weist mindestens eine Feder auf, die aus einem Kunststoffmaterial gefertigt sein kann.

Der vorliegenden Erfindung liegt die Aufgabe zugrunde, eine verbesserte Gasventileinheit zur Verfügung zu stellen, bei der die Funktion des Absperrventils dauerhaft sicher gewährleistet ist.

Diese Aufgabe wird erfindungsgemäß dadurch gelöst, dass das Verbindungselement einen als Überdrucksicherung ausgebildeten Kunststoffbogen aufweist.

Gemäß einem ersten Aspekt der Erfindung wird demnach eine Gasventileinheit zum Einstellen eines einem Gasbrenner eines Gasgeräts, insbesondere eines Gaskochgeräts, zugeführten Gasvolumenstroms vorgeschlagen, wobei die Gasventileinheit ein Ventilgehäuse und eine Betätigungswelle zum Einstellen eines Öffnungsquerschnitts der Gasventileinheit und ein zusätzliches Absperrventil aufweist, und wobei eine Bewegung der Betätigungswelle mittels eines linear verschiebbaren Verbindungselements auf das Absperrventil übertragbar ist. Dabei hat das Verbindungselement einen als Überdrucksicherung ausgebildeten Kunststoffbogen. Der Kunststoffbogen weist einen ersten Radius auf, wenn eine an dem Kunststoffbogen angreifende Druckkraft kleiner oder gleich einem bestimmten Grenzwert ist. Entsprechend hat der Kunststoffbogen einen zweiten Radius, wenn die an dem Kunststoffbogen angreifende Druckkraft größer als der vorbestimmte Grenzwert ist.

Wenn auf das Verbindungselement eine so hohe Kraft ausgeübt wird, durch welche nachgeordnete Bauteile beschädigt werden könnten, knickt der Kunststoffbogen des Verbindungselementes ein und verhindert so eine Beschädigung von diesen Bauteilen. Wenn keine Kraft mehr auf die Betätigungswelle wirkt, geht die Einknickung an dem Kunststoffbogen zurück und der Kunststoffbogen hat wieder seine ursprüngliche Länge. Gleichzeitig ist der Kunststoffbogen derart ausgelegt, dass normale Druckkräfte, die nicht zu einer Beschädigung von Bauteilen führen, von dem Kunststoffbogen übertragen werden. Dabei stellt der Kunststoffbogen und insgesamt das Verbindungselement sicher, dass bei einem Drücken der Betätigungswelle durch die Bedienperson das Absperrventil so weit geöffnet wird, dass das Absperrelement anschließend, beispielsweise mittels einer von einem Thermoelement mit elektrischem Strom versorgten Magneteinheit, selbsttätig offen gehalten werden kann.

Zweckmäßig ist es, wenn das Verbindungselement zur Übertragung von Druckkräften geeignet ist. Unter dem Begriff "Druckkraft" ist hierbei eine linear wirkende Kraft zu verstehen.

Die Verwendung des Kunststoffbogens als Überdrucksicherung hat gegenüber der Verwendung einer Feder den Vorteil, dass der Kunststoffbogen einfacher und damit kostengünstiger hergestellt werden kann. Aufgrund des verminderten Platzbedarfs des Kunststoffbogens und der Möglichkeit seiner linearen Anordnung besteht gegenüber der Verwendung einer Feder ein weiterer Vorteil darin, dass es zu einem geringeren Druckverlust des zu fördernden Gasvolumenstromes kommt.

Die Gasventileinheit ist insbesondere Teil eines handbetätigten Mehrfachstellgeräts, welches aus einem Ventilteil und einer adaptierten Zündsicherung besteht. In dem Ventilteil sind insbesondere ein Griff oder Drehknebel, Ventile, Düsen und Dichtungen integriert. Der Griff kann durch leichten Druck eingedrückt werden. Hierbei wird die Zündsicherung betätigt. Die Auf-Zu-Ventile werden in einem oder mehreren gasdichten Räumen durch ein bzw. mehrere federnde Bauteile auf Dichtungen gedrückt und verhindern somit den Durchfluss zu den dazugehörenden Öffnungen oder Dichtungsöffnungen. Die federnden Bauteile oder Federn finden ihren Gegenhalt an einer Ringscheibe innerhalb eines - gasdichten -Raums.

Gemäß einer Ausführungsform ist das Verbindungselement als ein einteiliger Kunststoffbogen ausgeführt. Der einteilige Kunststoffbogen kann einfach und damit sehr kostengünstig gefertigt werden.

Der Kunststoffbogen weist einen ersten Radius auf, wenn eine an dem Kunststoffbogen angreifende Druckkraft kleiner oder gleich einem bestimmten Grenzwert ist. Entsprechend hat der Kunststoffbogen einen zweiten Radius, wenn die an dem Kunststoffbogen angreifende Druckkraft größer als der vorbestimmte Grenzwert ist.

Durch die Wahl des Materials für den Kunststoffbogen kann der Grenzwert für das Einknicken vorbestimmt und damit eingestellt werden. In Abhängigkeit der Wahl des ersten und zweiten Radius kann der Kunststoffbogen und damit das Verbindungselement auf die jeweilige Applikation in der Gasventileinheit eingestellt werden.

Gemäß einer weiteren Ausführungsform ist der Kunststoffbogen derart ausgestaltet, dass er durch ein Einknicken von dem ersten Radius in den zweiten Radius verformbar ist, falls die an dem Kunststoffbogen angreifende Druckkraft größer als der vorbestimmte Grenzwert ist.

Gemäß einer weiteren Ausführungsform der Kunststoffbogen ist derart ausgestaltet, dass er von dem zweiten Radius in den ersten Radius verformbar ist, falls die in dem Kunststoffbogen angreifende Druckkraft kleiner als der vorbestimmte Grenzwert ist.

Gemäß einer weiteren Ausführungsform ist ein Absperrelement des Absperrventils mittels einer Schließfeder in Schließstellung vorgespannt.

Damit ist sichergestellt, dass das Absperrventil in Ruhestellung stets geschlossen ist. Durch manuelles Drücken der Betätigungswelle kann das Absperrventil entgegen der Kraft der Schließfeder geöffnet werden. In Schließstellung liegt das Absperrventil an einem Ventilsitz des Absperrventils auf und verhindert so den Durchfluss von Gas durch die Gasventileinheit.

Gemäß einer weiteren Ausführungsform ist eine Federkonstante des Kunststoffbogens des Verbindungselements größer als eine Federkonstante der Schließfeder. Ein Drücken der Betätigungswelle führt daher zunächst in erster Linie zu einer linearen Verschiebung des Verbindungselementes und damit zu einem Öffnen des Absperrventils. Erst dann, wenn das Absperrventil maximal geöffnet ist und das Absperrelement mit der Ankerplatte an dem Eisenkern der Spulen anliegt, erhöht sich die auf den Kunststoffbogen wirkende Kraft, wodurch der Kunststoffbogen bei Überschreiten des vorbestimmten Grenzwertes einknickt. Die maximal auf das Absperrelement wirkende Kraft ist damit durch den Kunststoffbogen des Verbindungselements begrenzt.

Gemäß einer weiteren Ausführungsform ist eine Umlenkvorrichtung vorgesehen ist, die eine axiale Bewegung der Betätigungswelle in eine dazu - winkelige axiale Bewegung des Verbindungselements überträgt.

Eine solche Umlenkvorrichtung ist insbesondere dann erforderlich, wenn die Baugröße der Gasventileinheit in Längsrichtung der Betätigungswelle begrenzt ist.

Gemäß einer weiteren Ausführungsform hat die Umlenkvorrichtung ein erstes Gleitelement, das an der Betätigungswelle im Bereich des einem Bedienabschnitt entgegengesetzten Endes der Betätigungswelle angeordnet ist.

Die Ausführung des ersten Gleitelements als kegelförmiges Element hat den Vorteil, dass die räumliche Ausdehnung des ersten Gleitelements unabhängig von der Rotationsposition der Betätigungswelle ist.

Gemäß einer weiteren Ausführungsform hat das Verbindungselement ein zweites Gleitelement, das sich zumindest während eines Drückens der Betätigungswelle in Kontakt mit dem ersten Gleitelement befindet.

Das zweite Gleitelement ist vorzugsweise als kegelförmiges Element ausgebildet, dessen Mittelachse im Wesentlichen senkrecht zu der Betätigungswelle angeordnet ist und dessen Spitze in Richtung des ersten Gleitelements weist. Bei einem axialen Verschieben des ersten Gleitelements gleiten die beiden Gleitelemente aneinander ab und das zweite Gleitelement verschiebt sich - und damit das Verbindungselement - in axialer Richtung des zweiten Gleitelements.

Gemäß einer weiteren Ausführungsform ist das zweite Gleitelement als Teil des an dem der Betätigungswelle zugewandten Endes des Verbindungselements ausgebildet. Eine axiale Bewegung des zweiten Gleitelements bewirkt dadurch automatisch eine axiale Bewegung des Verbindungselements.

Gemäß einer weiteren Ausführungsform weist das Verbindungselement an seinem der Betätigungswelle abgewandten Ende einen Pin zur Betätigung des Absperrelementes und zumindest einen Führungsstift, insbesondere einen horizontalen Führungsstift und einen vertikalen Führungsstift, auf.

Durch die Verwendung des Pins, welcher eine relativ geringe Kontaktfläche aufweist, wird der Einfluss auf das Absperrelement minimiert. Der Führungsstift bzw. die Führungsstifte sind dazu eingerichtet, die Bewegung des Verbindungselementes in der Gasventileinheit zu führen.

Gemäß einem zweiten Aspekt der Erfindung wird eine Gasarmatur vorgeschlagen, welche zumindest eine Gasventileinheit gemäß dem ersten Aspekt oder gemäß einer Ausführungsform des ersten Aspekts aufweist.

Gemäß einem dritten Aspekt der Erfindung wird ein Gasgerät, insbesondere ein Gasbackofen, vorgeschlagen, welches eine Gasarmatur gemäß dem zweiten Aspekt aufweist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert. Dabei zeigen:
- Fig. 1: eine Schnittansicht einer Gasventileinheit,
- Fig. 2: eine Ansicht eines Verbindungselementes, und
- Fig. 3: ein Diagramm zur Illustrierung der druckabhängigen Deformationen unterschiedlicher Verbindungselemente.

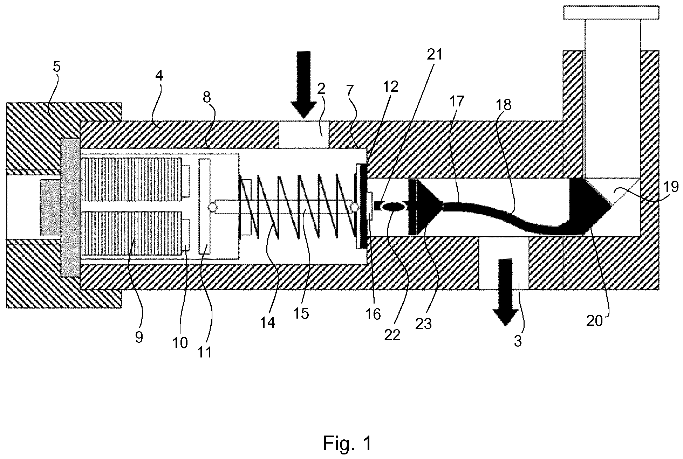

Die Fig. 1 zeigt eine Gasventileinheit 1 einer Gasarmatur, welche zum Einstellen eines einem Gasbrenner eines Gaskochgeräts zugeführten Gasvolumenstroms geeignet ist.

Die Gasventileinheit 1 hat einen Gaseingang 2, mit dem sie beispielsweise an eine Hauptgasleitung eines Gaskochgeräts angeschlossen ist. An dem Gaseingang 2 steht das zur Verbrennung vorgesehene Gas mit einem konstanten Druck, von beispielsweise 20 mbar oder 50 mbar. An einem Gasausgang 3 der Gasventileinheit 1 wird eine beispielsweise zu einem Gasbrenner des Gaskochgeräts führende Gasleitung angeschlossen. Der Gaseingang 2 ist über einen Gasausgangsraum der Gasventileinheit 1 mit der Eingangsseite einer Mehrzahl von Auf-Zu-Ventilen verbunden (nicht gezeigt). Durch Öffnen der Auf-Zu-Ventile ist der Gaseingang 2 jeweils mit dem Gasausgangsraum verbunden.

Die Gasventileinheit 1 weist ein Ventilgehäuse 4, eine an dem Ventilgehäuse 4 befestigbare Überwurfmutter 5 und eine Betätigungswelle 6 auf, mittels welcher der Benutzer ein Absperrventil 7, welches zwischen dem Gaseingang 2 und dem Gasausgang 3 angeordnet ist, öffnen und schließen kann. Das Absperrventil 7 umfasst einen Magneteinsatz 8, welcher eine Spule 9, einen Eisenkern 10 und eine Ankerplatte 11 umfasst. Zum Absperren zwischen dem Gaseingang 2 und dem Gasausgang 3 hat das Absperrventil 7 ein Absperrelement 12, welches eine Dichtungsaufnahme 13 und eine Druckfläche 16 für eine Hubeinleitung aufweist. Das Absperrelement 12 des Absperrventils 7 ist mittels einer Schließfeder 14 in Schließstellung vorgespannt. Zwischen dem Absperrelement 12 und dem Magneteinsatz 5 ist im inneren Volumen der Schließfeder 14 ein Druckstift 15 vorgesehen.

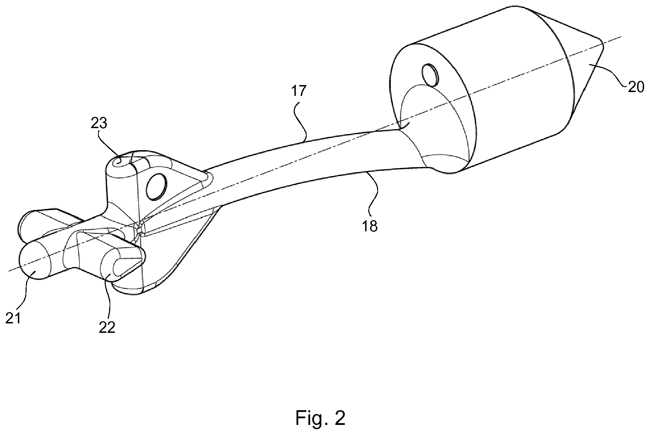

Eine Bewegung der Betätigungswelle 6 ist mittels eine linear verschiebbaren Verbindungselementes 17 auf das Absperrventil 7 übertragbar. Dazu hat die Gasventileinheit 1 eine Umlenkvorrichtung 19, welche eine axiale Bewegung der Betätigungswelle 6 in eine dazu - winkelige axiale Bewegung des Verbindungselementes 17 überträgt. Wird also die Betätigungswelle 6 durch den Benutzer betätigt, zum Beispiel nach unten gedrückt, wird das Absperrventil 7 durch eine axiale Bewegung des Verbindungselementes 17 geöffnet. Das Verbindungselement 17 wirkt dann auf die Druckfläche 16 zur Hubeinleitung und wirkt somit gegen die Kraft der Schließfeder 14. Die Umlenkvorrichtung 19 hat dabei vorzugsweise ein erstes Gleitelement, welches an der Betätigungswelle 6 im Bereich des dem Bedienabschnitt entgegengesetzten Endes der Betätigungswelle 6 angeordnet ist. Ein in Wirkverbindung mit dem ersten Gleitelement 19 verschiebbares zweites Gleitelement 20 ist Teil des Verbindungselementes 17. Das zweite Gleitelement 20 befindet sich zumindest während eines Drückens der Betätigungswelle 6 in Kontakt mit dem ersten Gleitelement 19. Das zweite Gleitelement 20 ist als Teil des an dem der Betätigungswelle 6 zugewandten Endes des Verbindungselementes 17 ausgebildet (siehe auch Fig. 2).

Hierzu ist in Fig. 2 eine Detailansicht des Verbindungselementes 17 abgebildet. Das Verbindungselement 17 hat einen als Überdrucksicherung 18 ausgebildeten Kunststoffbogen. Der Kunststoffbogen 18 knickt ab einem bestimmten Grenzwert der auf ihn einwirkenden Druckkraft ein und verhindert somit potentielle Beschädigungen von nachgeordneten Bauteilen. Dabei hat der Kunststoffbogen 18 einen ersten Radius, falls die an dem Kunststoffbogen 18 angreifende Druckkraft kleiner oder gleich dem bestimmten Grenzwert ist. Falls die an dem Kunststoffbogen 18 angreifende Druckkraft aber größer als der vorbestimmte Grenzwert ist, knickt der Kunststoffbogen 18 ein und nimmt einen zweiten Radius ein. Durch geeignete Materialwahl und Steifigkeit des Kunststoffbogens 18 wird der Radius derart ausgestaltet, dass er maximal hinsichtlich des vorhandenen Einbauraums in dem Gasventil 1 ist. Durch Einstellung eines maximalen zweiten Radius in dem vorhandenen Bauraum wird eine bevorzugte Deformierungsrichtung vorgegeben und die kritische Druckkraft, der vorbestimmte Grenzwert, ist stabil.

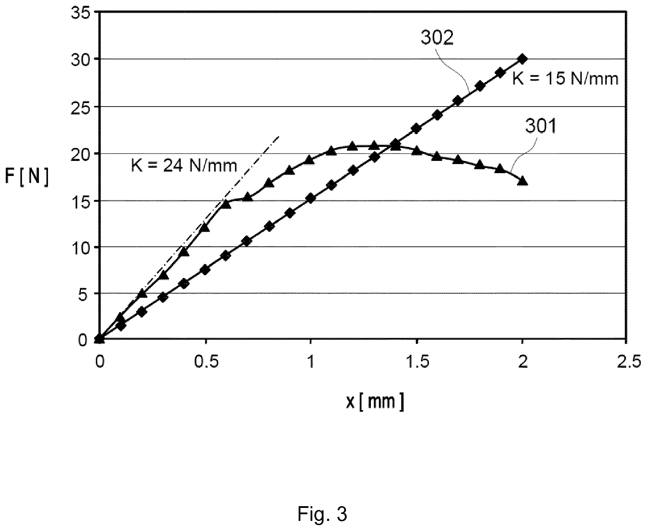

Hierzu zeigt die Fig. 3 ein Diagramm zur Illustrierung der druckkraftabhängigen Deformationen unterschiedlicher Verbindungselemente. Dabei zeigt die Kurve 301 die Deformation des vorliegenden Verbindungselementes mit Kunststoffbogen, wohingegen die Kurve 302 ein herkömmliches Verbindungselement mit Feder zeigt. Die x-Achse der Fig. 3 illustriert die Deformation x in Millimeter und die y-Achse zeigt die Druckkraft F in Newton. Die Kurve 302 für die Feder entspricht einer Ursprungsgeraden mit einer Steifigkeit K von 15 N/mm (K=15N/mm).

Die Kurve 301 illustriert, dass der vorbestimmte Grenzwert für den Kunststoffbogen bei etwas mehr als 20 N liegt. In dem linearen Bereich, der den normalen Betrieb des Kunststoffbogens vor dem Einknicken zeigt, ist die Steigung der Kurve 301 größer als die der Kurve 302 (K=24N/mm). Folglich ist die Deformation in diesem normalen Betrieb kleiner als bei der Feder. Im Vergleich hierzu hat die Feder mit konstanter Steifigkeit eine maximale Kraft von etwa 20 N mit einer Deformation von 1,5 mm, aber mit geringerer Steifigkeit.

Des Weiteren weist das Verbindungselement 17 an seinem der Betätigungswelle 6 abgewandten Ende einen Pin 21 zur Betätigung des Absperrelementes 12 sowie einen horizontalen Führungsstift 22 und einen vertikalen Führungsstift 23 auf. Die Führungsstifte 22 und 23 sind nicht in der gleichen Ebene, um den Druckverlust zu minimieren. Zur Minimierung des Druckverlustes trägt insbesondere der kleine Querschnitt des Kunststoffbogens 18 relativ zum Volumen des Einbauraums bei. Damit ist der Druckverlust verursacht durch den vorliegenden Kunststoffbogen deutlich geringer als bei einer Feder als Überdrucksicherung.

### Bezugszeichenliste

- 1: Gasventileinheit
- 2: Gaseingang
- 3: Gasausgang
- 4: Ventilgehäuse
- 5: Überwurfmutter
- 6: Betätigungswelle
- 7: Absperrventil
- 8: Magneteinsatz
- 9: Spule
- 10: Eisenkern
- 11: Ankerplatte
- 12: Absperrelement
- 13: Dichtungsaufnahme
- 14: Schließfeder
- 15: Druckstift
- 16: Druckfläche für Hubeinleitung
- 17: Verbindungselement
- 18: Überdrucksicherung
- 19: erstes Gleitelement
- 20: zweites Gleitelement
- 21: Pin
- 22: Führungsstift
- 23: Führungsstift
- F: Druckkraft
- K: Steifigkeit
- x: Deformation

## Patentansprüche

1. Gasventileinheit (1) zum Einstellen eines einem Gasbrenner eines Gasgeräts, insbesondere eines Gaskochgeräts, zugeführten Gasvolumenstroms, wobei die Gasventileinheit (1) ein Ventilgehäuse (4) und eine Betätigungswelle (6) zum Einstellen eines Öffnungsquerschnitts der Gasventileinheit (1) und ein zusätzliches Absperrventil (7) aufweist, wobei eine Bewegung der Betätigungswelle (6) mittels eines linear verschiebbaren Verbindungselements (17) auf das Absperrventil (7) übertragbar ist, und wobei das Verbindungselement (17) einen als Überdrucksicherung ausgebildeten Kunststoffbogen (18) aufweist, **dadurch gekennzeichnet, dass** der Kunststoffbogen (18) einen ersten Radius aufweist, falls eine an dem Kunststoffbogen (18) angreifende Druckkraft kleiner oder gleich einem bestimmten Grenzwert ist, und einen zweiten Radius aufweist, falls die an dem Kunststoffbogen (18) angreifende Druckkraft größer als der vorbestimmte Grenzwert ist.

2. Gasventileinheit nach Anspruch 1, **dadurch gekennzeichnet, dass** das Verbindungselement (17) als ein einteiliger Kunststoffbogen ausgeführt ist.

3. Gasventileinheit nach Anspruch 1 oder 2, **dadurch gekennzeichnet, dass** der Kunststoffbogen (18) derart ausgestaltet ist, dass er durch ein Einknicken von dem ersten Radius in den zweiten Radius verformbar ist, falls die an dem Kunststoffbogen angreifende Druckkraft größer als der vorbestimmte Grenzwert ist.

4. Gasventileinheit nach einem der Ansprüche 1 bis 3, **dadurch gekennzeichnet, dass** der Kunststoffbogen (18) derart ausgestaltet ist, dass er von dem zweiten Radius in den ersten Radius verformbar ist, falls die in dem Kunststoffbogen (18) angreifende Druckkraft kleiner als der vorbestimmte Grenzwert ist.

5. Gasventileinheit nach einem der Ansprüche 1 bis 4, **dadurch gekennzeichnet, dass** ein Absperrelement (12) des Absperrventils (7) mittels einer Schließfeder (14) in Schließstellung vorgespannt ist.

6. Gasventileinheit nach Anspruch 5, **dadurch gekennzeichnet, dass** eine Federkonstante des Kunststoffbogens (18) des Verbindungselements (17) größer als eine Federkonstante der Schließfeder (14) ist.

7. Gasventileinheit nach einem der Ansprüche 1 bis 6, **dadurch gekennzeichnet, dass** eine Umlenkvorrichtung (19) vorgesehen ist, die eine axiale Bewegung der Betätigungswelle (6) in eine - winkelige axiale Bewegung des Verbindungselements (17) überträgt.

8. Gasventileinheit nach einem der Ansprüche 1 bis 7, **dadurch gekennzeichnet, dass** die Umlenkvorrichtung (19) ein erstes Gleitelement aufweist, das an der Betätigungswelle (6) im Bereich des einem Bedienabschnitt entgegengesetzten Endes der Betätigungswelle (6) angeordnet ist.

9. Gasventileinheit nach Anspruch 8, **dadurch gekennzeichnet, dass** das Verbindungselement (17) ein zweites Gleitelement (20) aufweist, das sich zumindest während eines Drückens der Betätigungswelle (6) in Kontakt mit dem ersten Gleitelement (19) befindet.

10. Gasventileinheit nach Anspruch 9, **dadurch gekennzeichnet, dass** das zweite Gleitelement (20) als Teil des an dem der Betätigungswelle (6) zugewandten Endes des Verbindungselements (17) ausgebildet ist.

11. Gasventileinheit nach einem der Ansprüche 5 bis 10, **dadurch gekennzeichnet, dass** das Verbindungselement (17) an seinem der Betätigungswelle (6) abgewandten Ende einen Pin (21) zur Betätigung des Absperrelementes (12) und zumindest einen Führungsstift, insbesondere einen horizontalen Führungsstift (22) und einen vertikalen Führungsstift (23), aufweist.

12. Gasarmatur mit zumindest einer Gasventileinheit nach einem der Ansprüche 1 bis 11.

13. Gasgerät, insbesondere Gasbackofen, welches eine Gasarmatur nach Anspruch 12 aufweist.

## Claims

1. Gas valve unit (1) for controlling a gas throughput routed to a gas burner of a gas appliance, especially of a gas cooker, wherein the gas valve unit (1) has a valve housing (4) and an actuation shaft (6) for setting an opening cross-section of the gas valve unit (1) and an additional stop valve (7), wherein a movement of the actuation shaft (6) can be transmitted to the stop valve (7) by means of a linearly displaceable connection element (17), and wherein the connection element (17) has a plastic bend (18) embodied as an overpressure protection, **characterised in that** the plastic bend (18) has a first radius if a pressure force engaging on the plastic bend (18) is less than or equal to a specific threshold value, and has a second radius if the pressure force engaging on the plastic bend (18) is greater than the prespecified threshold value.

2. Gas valve unit according to claim 1, **characterised in that** the connection element (17) is embodied as a one-piece plastic bend.

3. Gas valve unit according to claim 1 or 2, **characterised in that** the plastic bend (18) is embodied such that it can be deformed by kinking from the first radius into the second radius if the pressure force engaging on the plastic bend is greater than the prespecified threshold value.

4. Gas valve unit according to claim 1 to 3, **characterised in that** the plastic bend (18) is embodied such that it can be deformed from the second radius into the first radius if the pressure force engaging on the plastic bend (18) is less than the prespecified threshold value.

5. Gas valve unit according to one of claims 1 to 4, **characterised in that** a stop element (12) of the stop valve (7) is pretensioned by means of a closing spring (14) in the closed position.

6. Gas valve unit according to claim 5, **characterised in that** a spring constant of the plastic bend (18) of the connection element (17) is greater than a spring constant of the closing spring (14).

7. Gas valve unit according to one of claims 1 to 6, **characterised in that** a redirection device (19) is provided, which transfers an axial movement of the actuation shaft (6) into an angled axial movement of the connection element (17).

8. Gas valve unit according to one of claims 1 to 7, **characterised in that** the redirection device (19) has a first slide element which is arranged on the actuation shaft (6) in the region of the end of the actuation shaft (6) opposite a control section.

9. Gas valve unit according to claim 8, **characterised in that** the connection element (17) has a second slide element (20) which, at least while the actuation shaft (6) is being pushed, is in contact with the first slide element (19).

10. Gas valve unit according to claim 9, **characterised in that** the second slide element (20) is embodied as part of the end of the connection element (17) facing towards the actuation shaft (6).

11. Gas valve unit according to one of claims 5 to 10, **characterised in that** the connection element (17), on its end facing away from the actuation shaft (6), has a pin (21) for actuating the stop element (12) and at least one guide pin, especially a horizontal guide pin (22) and a vertical guide pin (23).

12. Gas fitting having at least one gas valve unit according to one of claims 1 to 11.

13. Gas appliance, especially a gas cooker, which has a gas fitting according to claim 12.

## Revendications

1. Unité de soupape à gaz (1) permettant de régler le débit volumique de gaz alimenté au brûleur à gaz d'un appareil à gaz, en particulier d'un appareil de cuisson au gaz, dans laquelle l'unité de soupape à gaz (1) comporte un boîtier de soupape (4) et un arbre d'actionnement (6) permettant de régler une section transversale d'orifice de l'unité de soupape à gaz (1) et une soupape d'arrêt (7) supplémentaire, dans laquelle le mouvement de l'arbre d'actionnement (6) peut être transmis à la soupape d'arrêt (7) au moyen d'un élément de liaison (17) déplaçable linéairement, et dans laquelle l'élément de liaison (17) comporte un coude en plastique (18) conçu en tant que protection contre la surpression, **caractérisée en ce que** le coude en plastique (18) présente un premier rayon si une force de pression agissant sur le coude en plastique (18) est inférieure ou égale à une valeur limite donnée, et présente un second rayon si la force de pression agissant sur le coude en plastique (18) est supérieure à la valeur limite prédéterminée.

2. Unité de soupape à gaz selon la revendication 1, **caractérisée en ce que** l'élément de liaison (17) est réalisé sous forme de coude en plastique monobloc.

3. Unité de soupape à gaz selon la revendication 1 ou 2, **caractérisée en ce que** le coude en plastique (18) est configuré de manière à pouvoir être déformé par un empiétement du premier rayon dans le second rayon si la force de pression agissant sur le coude en plastique est supérieure à la valeur limite prédéterminée.

4. Unité de soupape à gaz selon l'une des revendications 1 à 3, **caractérisée en ce que** le coude en plastique (18) est configuré de manière à pouvoir être déformé du second rayon dans le premier rayon si la force de pression agissant sur le coude en plastique (18) est inférieure à la valeur limite prédéterminée.

5. Unité de soupape à gaz selon l'une des revendications 1 à 4, **caractérisée en ce qu'**un élément d'arrêt (12) de la soupape d'arrêt (7) est précontraint au moyen d'un ressort de fermeture (14) en position de fermeture.

6. Unité de soupape à gaz selon la revendication 5, **caractérisée en ce qu'**une constante de rappel du coude en plastique (18) de l'élément de liaison (17) est supérieure à une constante de rappel du ressort de fermeture (14).

7. Unité de soupape à gaz selon l'une des revendications 1 à 6, **caractérisée en ce qu'**il est prévu un dispositif de déviation (19) qui transforme un mouvement axial de l'arbre d'actionnement (6) en un mouvement axial angulaire de l'élément de liaison (17).

8. Unité de soupape à gaz selon l'une des revendications 1 à 7, **caractérisée en ce que** le dispositif de déviation (19) comporte un premier élément coulissant agencé au niveau de l'arbre d'actionnement (6) dans la zone de l'extrémité de l'arbre d'actionnement (6) opposée à une section de fonctionnement.

9. Unité de soupape à gaz selon la revendication 8, **caractérisée en ce que** l'élément de liaison (17) comporte un second élément coulissant (20) qui est en contact avec le premier élément coulissant (19) au moins lorsqu'une pression est exercée par l'arbre d'actionnement (6).

10. Unité de soupape à gaz selon la revendication 9, **caractérisée en ce que** le second élément coulissant (20) est conçu en tant que partie de l'extrémité de l'élément de liaison (17) faisant face à l'arbre d'actionnement (6).

11. Unité de soupape à gaz selon l'une des revendications 5 à 10, **caractérisée en ce que** l'élément de liaison (17) comporte, au niveau de son extrémité éloignée de l'arbre d'actionnement (6), une broche (21) permettant d'actionner l'élément d'arrêt (12) et au moins une goupille de guidage, en particulier une goupille de guidage horizontale (22) et une goupille de guidage verticale (23).

12. Robinet à gaz muni d'au moins une unité de soupape à gaz selon l'une des revendications 1 à 11.

13. Appareil à gaz, en particulier four à gaz, comportant un robinet à gaz selon la revendication 12.
